# EUROPEAN PATENT APPLICATION

(11) **EP 4 395 038 A1**
(43) Date of publication of application: **03.07.2024**
(21) Application number: 23860667.7
(22) Date of filing: 13.07.2023
(51) Int. Cl.: H01M 50/35, H01M 50/211, H01M 50/383, H01M 50/249, H01M 50/24

(54) **BATTERY PACK, BATTERY MODULE AND VEHICLE COMPRISING SAME**

(30) Priority: 31.08.2022 KR 20220110387; 06.03.2023 KR 20230029360
(71) Applicant: LG Energy Solution, Ltd., Seoul 07335 (KR)
(72) Inventor: PARK, Jin-Yong, Daejeon 34122 (KR); KWON, Woo-Yong, Daejeon 34122 (KR); KIM, Seung-Joon, Daejeon 34122 (KR); KIM, In-Soo, Daejeon 34122 (KR); SHIN, Song-Ju, Daejeon 34122 (KR); LEE, Myung-Woo, Daejeon 34122 (KR); KANG, Jong-Mo, Daejeon 34122 (KR); KIM, Kyung-Woo, Daejeon 34122 (KR); MOON, Duck-Hee, Daejeon 34122 (KR); LEE, Tae-Kyeong, Daejeon 34122 (KR); CHUNG, Se-Yun, Daejeon 34122 (KR); JEONG, Jong-Ha, Daejeon 34122 (KR); CHI, Ho-June, Daejeon 34122 (KR); HWANG, Ji-Soo, Daejeon 34122 (KR)
(74) Representative: Plasseraud IP
(86) International application number: PCT/KR2023/010046
(87) International publication number: WO 2024/048985

(57) **Abstract**

The present disclosure discloses a battery pack capable of ensuring excellent safety when a thermal event occurs, and the like. A battery pack according to one aspect of the present disclosure may include a plurality of pouch-type battery cells; a pack case accommodating the pouch-type battery cells in the internal space; and a cell cover including two unit covers at least partially spaced apart, provided to at least partially surround at least some of the pouch-type battery cells among the plurality of pouch-type battery cells in the internal space of the pack case, and configured to allow venting gas to be discharged into the separation space between the two unit covers.

## Description

### TECHNICAL FIELD

The present disclosure relates to a battery pack, a battery module, and a vehicle including the same, and more specifically, to a battery pack having excellent safety against thermal events, a battery module, and a vehicle including the same. The present application claims priority to Korean Patent Application No. 10-2022-0110387 filed on August 31, 2022 and Korean Patent Application No. 10-2023-0029360 filed on March 6, 2023, the disclosures of which are incorporated herein by reference.

### BACKGROUND ART

As the technology development and demand for various mobile devices, electric vehicles, energy storage systems (ESSs), and the like increase significantly, the interest in and demand for secondary batteries as an energy source are rapidly increasing. Nickel cadmium batteries or nickel hydrogen batteries have been widely used as conventional secondary batteries, but recently, lithium secondary batteries having advantages of free charge/discharge, very low self-discharge rate, and high energy density due to little memory effect compared to nickel-based secondary batteries, are widely used.

Such lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively, are disposed with a separator therebetween, and an exterior material that seals and accommodates the electrode assembly together with an electrolyte, that is, a battery case.

In general, lithium secondary batteries may be classified into can-type secondary batteries in which electrode assemblies are embedded in a metal can and pouch-type secondary batteries in which electrode assemblies are embedded in a pouch of aluminum laminate sheets, depending on the shape of an exterior material.

Recently, battery packs have been widely used for driving or energy storage in medium/large devices such as electric vehicles and ESSs. A conventional battery pack includes one or more battery modules and a control unit that controls charge/discharge of the battery pack, such as a battery management system (BMS), inside a pack case. Here, the battery module is configured to include a plurality of battery cells inside a module case. That is, in the case of a conventional battery pack, a plurality of battery cells (secondary batteries) are accommodated inside a module case to form each battery module, and one or more of these battery modules are accommodated inside the pack case to form a battery pack.

In particular, pouch-type batteries have advantages in various aspects, such as light weight and less dead space when stacked, but are problematic in that they are vulnerable to external impact and somewhat inferior in assemblability. Therefore, it is common for a battery pack to be manufactured by first modularizing a plurality of cells and then accommodating them inside a pack case.

However, conventional battery packs may be disadvantageous in terms of energy density, assemblability, coolability, and the like due to modularization. Specifically, in the process of modularizing a plurality of battery cells by accommodating them inside a module case, the volume of the battery pack may be unnecessarily increased or the space occupied by the battery cells may be reduced due to various components such as the module case or stacking frame. A battery module is first configured by modularizing a plurality of battery cells and then the battery module is accommodated in a pack case, whereby there is a problem that the manufacturing process of the battery pack becomes complicated. Since the module case is accommodated inside the pack case and the battery cells are accommodated inside the module case, when the heat of the battery cells accommodated inside the module case is discharged to the outside of the pack case through the module case, the cooling efficiency may be reduced and the cooling structure may also be complicated.

Recently, demand for battery packs applied to electric vehicles has been increasing. Since these battery packs have a plurality of battery cells, safety should be managed more strictly. If thermal runaway, ignition, or explosion occurs in some cells within any one battery module, the generated high-temperature gas, flame, or high-temperature internal material may be ejected and thermally propagated to other adjacent battery modules, thereby causing secondary thermal runaway, secondary fire, or explosion, and thus there is a concern that a chain of thermal runaway, ignition, or explosion may occur in cells within the plurality of battery modules. Therefore, there is a great need for a means capable of suppressing or delaying flame transfer between battery modules when a thermal event such as thermal runaway occurs. However, conventional battery packs or battery modules may be vulnerable to thermal events. In particular, if a thermal event occurs inside a battery module or battery pack, a thermal runaway may occur, resulting in flames and, in severe cases, even explosion.

### DISCLOSURE

### Technical Problem

The present disclosure is designed to solve the problems of the related art, and therefore the present disclosure is directed to providing a battery pack having excellent energy density, assemblability and/or coolability, a battery module, and a vehicle including the same.

The present disclosure is also directed to providing a battery pack capable of ensuring excellent safety in the event of a thermal event, a battery module, and a vehicle including the same.

However, technical problems to be solved by the present disclosure are not limited to the above-described problems, and other problems not mentioned herein may be clearly understood by those skilled in the art from the following description of the present disclosure.

### Technical Solution

A battery pack according to one aspect of the present disclosure may include a plurality of pouch-type battery cells; a pack case accommodating the pouch-type battery cells in the internal space; and a cell cover including two unit covers at least partially spaced apart, provided to at least partially surround at least some of the pouch-type battery cells among the plurality of pouch-type battery cells in the internal space of the pack case, and configured to allow venting gas to be discharged into the separation space between the two unit covers.

Here, the cell cover may be configured to support the plurality of pouch-type battery cells in an upright state.

In addition, the cell cover may be configured to partially surround the pouch-type battery cell so that at least one side of the wrapped pouch-type battery cell is exposed toward the pack case.

In addition, the pouch-type battery cell may have a receiving portion in which an electrode assembly is accommodated and edge portions around the receiving portion, wherein the cell cover may be configured to surround both sides of the receiving portion and a part of the edge portions of the wrapped pouch-type battery cell.

In addition, the cell cover may be provided to cover both side surfaces of the receiving portion and an upper edge portion of the wrapped pouch-type battery cell.

Here, the two unit covers may include a first cover configured to surround the left surface and one edge of the wrapped pouch-type battery cell, and a second cover configured to surround the right surface and the other edge of the wrapped pouch-type battery cell.

The first cover may include a first upper cover portion configured to surround the top of an upper edge portion of the pouch-type battery cell, and a first side cover portion extending downward from one end of the first upper cover portion and surrounding the outside of one side receiving portion of the wrapped pouch-type battery cell, and the second cover may include a second upper cover portion configured to surround the top of an upper edge portion of the pouch-type battery cell, and a second side cover portion extending downward from one end of the second upper cover portion and surrounding the outside of the other side receiving portion of the wrapped pouch-type battery cell, wherein the second upper cover portion may be spaced apart from the first upper cover portion in the direction of the upper edge portion of the pouch-type battery cell.

In addition, the first side cover portion and the pouch-type battery cell may be bonded, and the second side cover portion and the pouch-type battery cell may be bonded.

In addition, the second side cover portion may have a longer length in the vertical direction compared to the first side cover portion.

In addition, venting gas may move through the gap between the first upper cover portion and the second side cover portion to a venting channel defined as a separation space between the first upper cover portion and the second upper cover portion, and may be discharged through the gap between the second upper cover portion and the first side cover portion.

In addition, the venting channel may be formed to be curved by including a bending portion in the first upper cover portion and the second upper cover portion.

In addition, the two unit covers may be configured such that one ends thereof are bent toward each other.

In addition, the two unit covers may be configured to be laid over in the vertical direction with their bent ends at least partially spaced apart so that the venting gas may be discharged.

Each of the two unit covers may be configured in a form of bending one plate.

In addition, the cell cover may have a mesh structure in the separation space between the two unit covers.

In addition, the cell cover may form a bending portion on the two unit covers so that the movement path of gas discharged into the separation space between the two unit covers is increased.

In addition, the battery pack according to the present disclosure may further include a control module accommodated in the internal space of the pack case and configured to control charge/discharge of the pouch-type battery cells.

In addition, a battery module according to another aspect of the present disclosure is a battery module, one or more of which are accommodated in the internal space of the pack case, and may include a plurality of pouch-type battery cells; a module case accommodating the pouch-type battery cells in the internal space; and a cell cover including two unit covers at least partially spaced apart, provided to at least partially surround at least some of the pouch-type battery cells among the plurality of pouch-type battery cells in the internal space of the module case, and configured to allow venting gas to be discharged into the separation space between the two unit covers.

In addition, a vehicle according to still another aspect of the present disclosure may include a battery pack or a battery module according to the present disclosure.

### Advantageous Effects

According to one aspect of the present disclosure, as a cell to pack (CTP) concept, a module case or the like is eliminated, thereby improving cooling performance and energy density.

According to one aspect of the present disclosure, a plurality of pouch-type battery cells may be stably accommodated inside a pack case without the configuration of a stacking frame such as a plastic cartridge or a separate module case.

In particular, according to an embodiment of the present disclosure, it is possible to easily implement a configuration in which a plurality of pouch-type battery cells are stacked side by side in the horizontal direction in a vertically upright state.

According to one aspect of the present disclosure, the energy density of a battery pack may be improved. Moreover, according to an embodiment of the present disclosure, the battery cells are directly accommodated in the pack case without being modularized, and thus a battery pack that does not require a module case for the battery module may be manufactured. Accordingly, by reducing the space occupied by the module case, more and more battery cells may be disposed inside the pack case. Therefore, there is an effect of further improving the energy density of the battery pack. Pouch-type battery cells may be directly assembled to the pack case of the battery pack, thereby maximizing space utilization of the battery pack and significantly improving energy capacity.

Moreover, according to one aspect of the present disclosure, a pouch-type battery cell having a flexible material case may be easily made into a solid form, so that a configuration in which the battery cells are directly stacked inside a pack case or a module case may be more easily implemented. Accordingly, the assemblability and mechanical stability of the battery pack or battery module may be improved.

In addition, according to one aspect of the present disclosure, the cooling efficiency of the battery pack or battery module may be further improved. In particular, in the case of an embodiment of the present disclosure, a portion of each pouch-type battery cell is directly exposed to the pack case or module case, so that heat from each pouch-type battery cell may be effectively discharged to the outside through the pack case or module case.

Moreover, according to one aspect of the present disclosure, when thermal runaway occurs in a specific battery cell, it is possible to effectively respond to the thermal event. In particular, in the case of the present disclosure, it is possible to block or appropriately control the accumulation or discharge of heat corresponding to the ignition source among the three elements (fuel, oxygen, and ignition source) that generate flames. Furthermore, in the case of the present disclosure, emission control of venting gas, directional venting, spark blocking, and the like may be implemented so as to block heat accumulation and prevent flame emission.

In addition, according to one aspect of the present disclosure, internal short circuits or structural collapse may be prevented even when a thermal event occurs.

According to the present disclosure, a battery pack and a battery module with improved safety against thermal runaway, fire, explosion, and the like, that is, thermal safety, are provided. When heat is generated from some battery cells or battery modules in a battery module including a plurality of battery cells and in a battery pack including a plurality of battery modules, the heat propagation to surrounding battery cells or battery modules may be stably blocked.

In addition, according to one aspect of the present disclosure, the safety of the battery pack may be improved. In particular, according to an embodiment of the present disclosure, gas emitted from each battery cell may be smoothly discharged to the outside. Moreover, according to an embodiment of the present disclosure, the discharge direction of gas or flame emitted from a battery cell may be controlled. Therefore, thermal runaway propagation between adjacent battery cells may be effectively prevented.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is an exploded, schematic perspective view showing a partial configuration of a battery pack according to an embodiment of the present disclosure.
FIG. 2 is an exploded perspective view schematically showing the configuration of a pouch-type battery cell and a cell cover accommodated inside a battery pack according to an embodiment of the present disclosure.
FIG. 3 is a perspective view schematically showing the coupling configuration of a pouch-type battery cell and a cell cover accommodated inside a battery pack according to an embodiment of the present disclosure.
FIG. 4 is a Y-Z cross-sectional view of FIG. 3.
FIG. 5 is a cross-sectional view schematically showing the coupling configuration of a pouch-type battery cell and a cell cover accommodated inside a battery pack according to another embodiment of the present disclosure.
FIG. 6 is a cross-sectional view schematically showing the coupling configuration of a pouch-type battery cell and a cell cover accommodated inside a battery pack according to still another embodiment of the present disclosure.
FIG. 7 is a view schematically showing a partial cross-sectional configuration of a battery pack according to still another embodiment of the present disclosure.
FIG. 8 is a view schematically showing a partial cross-sectional configuration of a battery pack according to still another embodiment of the present disclosure.
FIG. 9 is a view schematically showing the configuration of a battery module according to an embodiment of the present disclosure.
FIG. 10 is a view schematically showing the configuration of a vehicle according to an embodiment of the present disclosure.

### BEST MODE

Hereinafter, preferred embodiments of the present disclosure will be described in detail with reference to the accompanying drawings. The terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

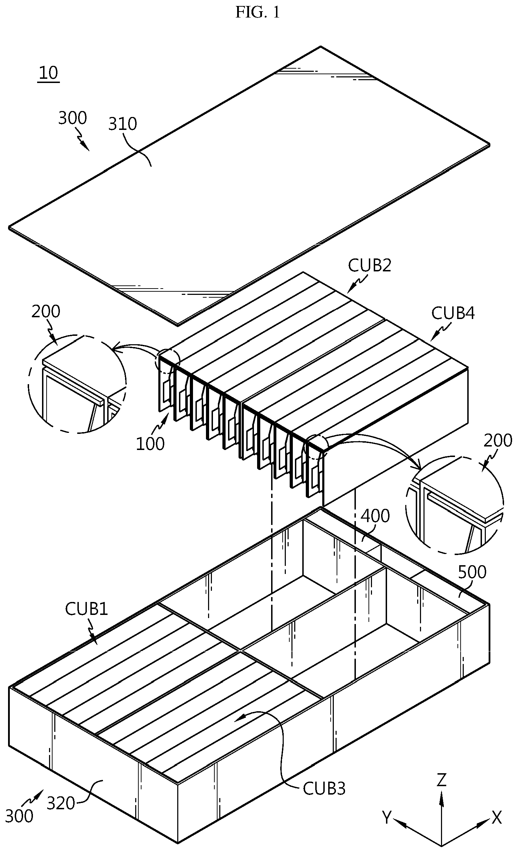

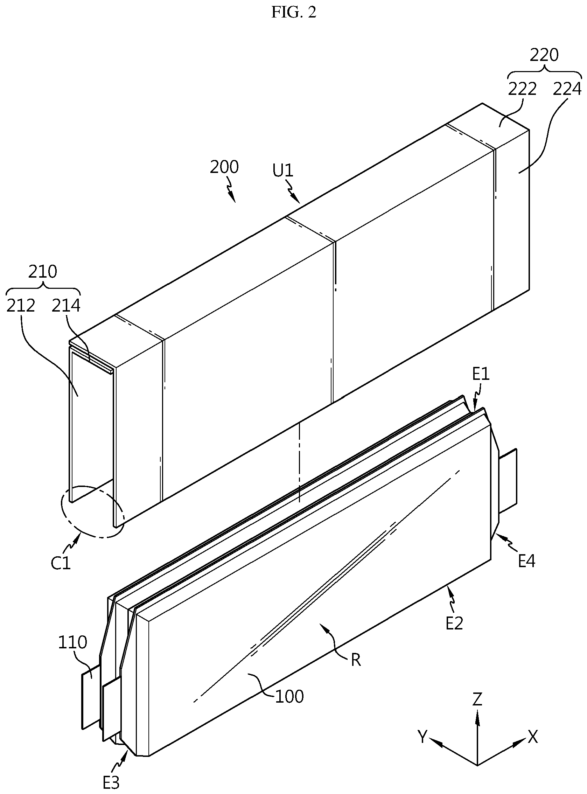

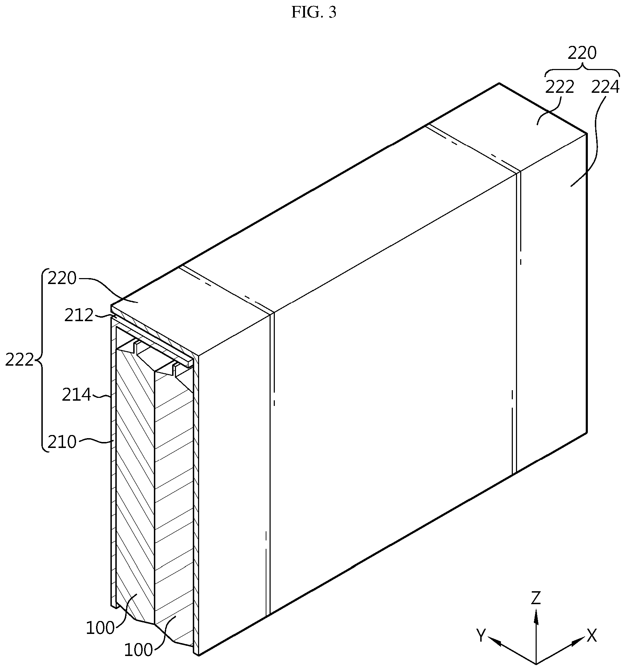

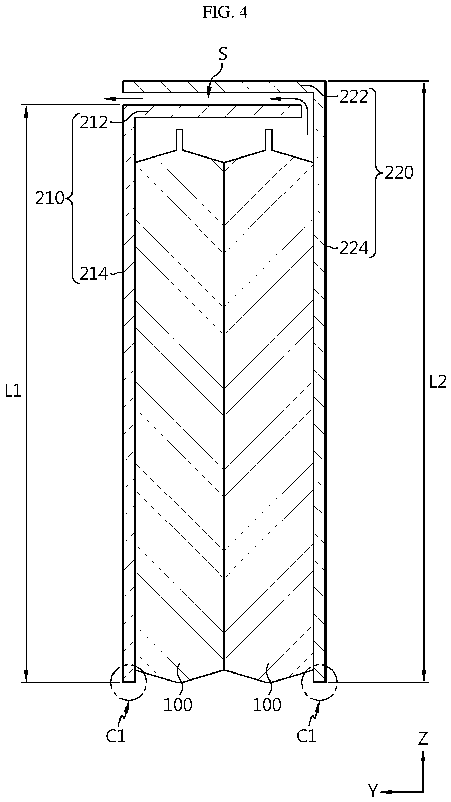

FIG. 1 is an exploded, schematic perspective view showing a partial configuration of a battery pack according to an embodiment of the present disclosure. FIG. 2 is an exploded perspective view schematically showing the configuration of a pouch-type battery cell and a cell cover accommodated inside a battery pack according to an embodiment of the present disclosure. FIG. 3 is a perspective view schematically showing the coupling configuration of a pouch-type battery cell and a cell cover accommodated inside a battery pack according to an embodiment of the present disclosure. FIG. 4 is a Y-Z cross-sectional view of FIG. 3.

Referring to FIGS. 1 to 4, a battery pack 10 according to an embodiment of the present disclosure includes a plurality of pouch-type battery cells 100, a pack case 300, and a cell cover 200.

The pouch-type battery cell 100 is a pouch-type secondary battery and may include an electrode assembly, an electrolyte, and a pouch exterior material. A plurality of such pouch-type battery cells 100 may be included in the battery pack 10. And, these plurality of pouch-type battery cells 100 may be stacked in at least one direction. For example, referring to what is shown in FIGS. 1 to 4, the plurality of pouch-type battery cells 100 may be stacked and disposed in the horizontal direction, for example, in the left-right direction (Y-axis direction in the drawing). In addition, the plurality of pouch-type battery cells 100 may be disposed in the front-rear direction (X-axis direction in the drawing) as shown in FIG. 1. Moreover, the plurality of pouch-type battery cells 100 may be disposed in the horizontal direction, and may be disposed to form a plurality of rows in the left-right direction and in the horizontal direction. For example, referring to what is shown in FIG. 1, the plurality of pouch-type battery cells 100 may be stacked in a form where cells disposed in the left-right direction are provided in two rows in the front-rear direction.

The battery pack according to the present disclosure may employ various types of pouch-type battery cells 100 known at the time of filing the present disclosure, and therefore a detailed description of the configuration of such pouch-type battery cells 100 will be omitted.

The pack case 300 has an empty space formed therein and may accommodate a plurality of pouch-type battery cells 100. For example, the pack case 300 may include an upper case 310 and a lower case 320, as shown in FIG. 1. As a more specific example, the lower case 320 may be configured in the form of a box with an open top to accommodate a plurality of battery cells in the internal space. And, the upper case 310 may be configured in the form of a cover that covers the top opening of the lower case 320. In this case, the upper case 310 may also be configured in the form of a box with an open bottom. In addition, the cell cover 200 together with a plurality of pouch-type battery cells 100 may be accommodated in the internal space of the pack case 300. The pack case 300 may be made of a plastic or metal material. In addition, the pack case 300 may employ various exterior materials of battery packs known at the time of filing the present disclosure.

The cell cover 200 may be configured to surround the pouch-type battery cell 100 in the internal space of the pack case 300. That is, the cell cover 200 may be configured to surround at least some of the pouch-type battery cells 100 among the plurality of pouch-type battery cells 100 included in the battery pack 10. Moreover, the cell cover 200 may be provided to at least partially surround the pouch-type battery cell 100.

The cell cover 200 may be configured to surround one or more pouch-type battery cells 100. For example, in the embodiment of FIGS. 1 to 4, one cell cover 200 is shown in a form surrounding two pouch-type battery cells 100. The cell cover 200 may be configured to surround two or more pouch-type battery cells 100 together.

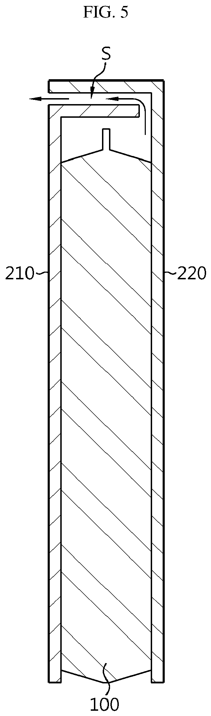

FIG. 5 is a cross-sectional view schematically showing the coupling configuration of a pouch-type battery cell and a cell cover accommodated inside a battery pack according to another embodiment of the present disclosure. In FIG. 5, one cell cover 200 is shown in a form surrounding one pouch-type battery cell 100. In this way, one cell cover 200 may be configured to surround only one pouch-type battery cell 100. In this case, it can be said that the cell cover 200 is individually coupled to each pouch-type battery cell 100 among the plurality of pouch-type battery cells 100.

The cell cover 200 may be at least partially adhered to the outer surface of the battery cell 100. For example, the cell cover 200 may have its inner surface adhered to the receiving portion of the pouch-type battery cell 100. The member for adhesion may be thermally conductive. Through this adhesion, the cell cover 200 is firmly coupled to the battery cell 100 and may help discharge heat generated in the battery cell 100 to the outside of the battery cell 100.

One or more cell covers 200 may be included in the battery pack. When a plurality of cell covers 200 are included, the plurality of cell covers 200 may be spaced apart from each other. For example, the plurality of cell covers 200 may be spaced apart in the X-axis direction. Direct heat transfer between the cell covers 200 may be blocked through the spaced apart space. In addition, separate members required to configure the battery pack 10 may be inserted through the spaced apart space. Alternatively, an insulating pad or a flame suppression pad may also be interposed in at least a portion between the plurality of cell covers 200. Such an insulating pad or a flame suppression pad may prevent heat or flame that may be generated within any one cell cover 200 from being transferred to another cell cover 200 and affecting other battery cells 100. The flame suppression pad may be formed of a heat-resistant resin such as vinyl chloride resin, a material such as silicon or ceramic, a composite of a heat-resistant resin and a ceramic or glass filler, or a metal plate coated with insulation, but this is exemplary and any flame-retardant material is sufficient. It is preferable that the flame suppression pad is made of a material that does not decompose, melt, or ignite at least up to the temperature at which thermal runaway of the battery cell 100 occurs (e.g., 150°C to 200°C).

In addition, when a plurality of cell covers 200 are stacked and included in the battery pack 10, an adhesive member may be interposed between the cell covers 200. For example, an adhesive member may be interposed in a portion where the two cell covers 200 face each other to adhesively fix them. Through this adhesive configuration, the connection configuration between multiple cell covers 200 may be made more robust.

In particular, the cell cover 200 may be configured to group and unitize a plurality of pouch-type battery cells 100 included in the battery pack. In this case, one cell cover 200 can be said to constitute one cell unit. And, the one cell unit may include one or a plurality of pouch-type battery cells 100. For example, it can be said that one cell unit is shown as indicated by 'U1' in FIG. 2, and a plurality of cell units are shown in FIG. 1. In this way, the battery pack 10 may include a plurality of cell units, in which case, the cell cover 200 can be said to be included in plurality in the battery pack. For example, when the cell cover 200 is configured to surround one pouch-type battery cell 100, the battery pack may include the same number of cell covers 200 as the number of pouch-type battery cells 100. In another example, when the cell cover 200 is configured to surround two or more pouch-type battery cells 100, the battery pack may include a smaller number of cell covers 200 than the number of pouch-type battery cells 100. Meanwhile, each cell group surrounded by the cell cover 200 may also be referred to as a cell bank unit in addition to a cell unit. The pouch-type battery cells 100 in the cell unit or cell bank may include an electrical connection in series and/or in parallel through a busbar or the like.

The cell cover 200 may be configured to support a plurality of pouch-type battery cells 100 in an upright state. As shown in FIG. 2, each pouch-type battery cell 100 has two wide surfaces, wherein edge portions of the wide surfaces may have sealing portions or folded portions of the pouch exterior material. Therefore, it is generally difficult to stack the pouch-type battery cells 100 in a vertically upright form with the narrow surface facing down. However, in the battery pack according to the present disclosure, the cell cover 200 may be configured to surround one or more pouch-type battery cells 100 and support the wrapped pouch-type battery cells 100 in a standing state, that is, an upright state.

In particular, the cell cover 200 may be configured such that a plurality of pouch-type battery cells 100 may be stacked in the horizontal direction in a vertically upright state. For example, as in the embodiment shown in FIGS. 1 and 3, a plurality of cell covers 200 are stacked on each other in the horizontal direction, and each cell cover 200 may be configured to surround one or more pouch-type battery cells 100. In this case, the configuration in which the plurality of pouch-type battery cells 100 are stacked side by side in the horizontal direction in each upright state may be stably maintained by the cell cover 200.

In particular, the cell cover 200 may be configured to be self-supporting in the internal space of the pack case 300. That is, the cell cover 200 may be configured to maintain an upright state on its own without the help of other components included in the battery pack, such as the pack case 300 or the pouch-type battery cell 100.

The cell cover 200 may be configured to partially surround the pouch-type battery cell so that at least one side of the wrapped pouch-type battery cell is exposed to the outside. That is, the cell cover 200 may be configured to surround only a portion of the pouch-type battery cell 100 without fully surrounding the entire pouch-type battery cell 100. In particular, the cell cover 200 may be configured such that at least one side of the pouch-type battery cell 100 is exposed toward the pack case 300. In this respect, the cell cover 200 may also be referred to by terms such as a cell sleeve.

For example, referring to the embodiment of FIGS. 2 to 4, the cell cover 200 is configured to surround two pouch-type battery cells 100, and the wrapped pouch-type battery cells 100, that is, the lower portion of the battery cell 100 accommodated in the internal space may not be surrounded by the cell cover 200. Therefore, the lower portion of the battery cell 100 may be exposed toward the pack case 300 and may directly face the pack case 300. In particular, referring to the embodiment of FIG. 1, the lower portion of the battery cell 100 may be exposed toward the bottom surface of the lower case 320.

In the present disclosure, the pouch-type battery cell 100 and the cell cover 200 may be directly seated on the pack case 300. Moreover, the lower ends of the pouch-type battery cell 100 and the cell cover 200 may be seated on the upper surface of the bottom of the pack case 300. For example, the cell cover 200 may be directly seated on the bottom surface of the lower case 320 in the embodiment of FIG. 1. At this time, a portion of the cell cover 200, such as a lower end portion of the cell cover 200 indicated by 'C 1' in FIG. 2 may be seated in direct contact with the bottom surface of the lower case 320. And, when the lower end portion of the cell cover 200 is seated in this way, the cell cover 200 may be configured to remain stably seated. In this case, if the cell cover 200 is made of a metal material with excellent rigidity such as steel, particularly stainless steel (SUS), the self-supporting state may be maintained more stably. Therefore, in this case, the standing state of the pouch-type battery cell 100 may be more reliably supported.

And, the cell cover 200 may be configured to support the battery cell accommodated therein. In particular, the cell cover 200 may be configured to stably support the upright state of the battery cell accommodated therein. The cell cover 200 may be configured to support the stacked state of the plurality of pouch-type battery cells 100 inside the pack case 300 through a structure that surrounds the battery cells in this way. For example, a plurality of pouch-type battery cells 100 may be stacked in the horizontal direction (Y-axis direction in the drawing) as shown in FIGS. 1 to 4. At this time, the cell cover 200 may be configured to stably maintain the stacked state of the plurality of pouch-type battery cells 100 stacked in the horizontal direction.

According to this aspect of the present disclosure, a plurality of pouch-type battery cells 100 may be directly seated and accommodated inside the pack case 300 without a module case. In particular, in the case of the pouch-type battery cells 100, the exterior material is made of a soft material, so it can be said that it is vulnerable to external impact and has low hardness. Therefore, it is not easy to accommodate the pouch-type battery cell 100 itself inside the pack case 300 without accommodating it in the module case. However, in the case of the present disclosure, the plurality of pouch-type battery cells 100 are coupled to the cell cover 200 in a state where at least a portion is surrounded by the cell cover 200 and then are directly accommodated inside the pack case 300, and their stacking state may be maintained stably.

Moreover, in the case of the present disclosure, a cell to pack (CTP) type battery pack using the pouch-type battery cell 100 may be implemented more efficiently. That is, in the case of the present disclosure, the battery pack 10 may be arranged in a form of directly accommodating the pouch-type battery cell 100 inside the pack case 300, rather than accommodating the pouch-type battery cell 100 inside a separate module case and accommodating this module case inside the pack case 300. In this case, at least one side of the pouch-type battery cell 100 may be exposed to the outside of the cell cover 200 and may be disposed to directly face the pack case 300.

Therefore, according to this aspect of the present disclosure, the battery pack 10 does not need to be further provided with a module case, a stacking frame, or fastening members such as bolts for maintaining the stacked state of the cells. Accordingly, the space occupied by other components, such as a module case or a stacking frame, or the resulting space for securing tolerances may be eliminated. Therefore, since the battery cell may occupy more space as much as the removed space, the energy density of the battery pack may be further improved.

In addition, according to this aspect of the present disclosure, since a module case, a stacking frame, a bolt, or the like are not provided, the volume and weight of the battery pack may be reduced, and the manufacturing process may be simplified.

According to the present disclosure, the assemblability of the battery pack may be improved. In particular, according to an embodiment of the present disclosure, the process of preparing a battery module by accommodating the pouch-type battery cell in a module case, and the process of accommodating one or more battery modules prepared in this way in the pack case may not be performed. Thus, the manufacturing process may be simplified, and manufacturing time may be reduced.

In addition, according to this aspect of the present disclosure, handling of the pouch-type battery cell 100 may become easier. For example, when accommodating a plurality of pouch-type battery cells 100 inside the pack case, the pouch-type battery cells 100 may be held by a jig or the like. At this time, the jig may hold the cell cover 200 surrounding the pouch-type battery cell 100, rather than directly holding the pouch-type battery cell 100. Accordingly, damage to or breakage of the pouch-type battery cell 100 caused by the jig may be prevented.

In addition, according to this aspect of the present disclosure, the cell cover 200 is coupled to the pouch-type battery cell 100, so that the pouch-type battery cell 100 may be effectively protected without a module case.

In addition, according to this embodiment of the present disclosure, the cooling performance of the battery pack may be secured more effectively. In particular, according to the above embodiment, the pouch-type battery cell 100 and the pack case 300 may be in direct face-to-face contact with each other through the open end of the cell cover 200. That is, one side of the pouch-type battery cell 100 disposed adjacent to the open end of the cell cover 200 may directly face or contact the pack case 300. Therefore, the heat emitted from each pouch-type battery cell 100 is directly transferred to the pack case 300, so that cooling performance may be improved. In addition, in this case, since a separate cooling structure may not be required between the pouch-type battery cell 100 and the pack case 300, efficient cooling performance may be implemented. And, in this case, there may be no space for a cooling medium such as air to flow in between the pouch-type battery cells 100.

In addition, in this case, at least one side of the cell cover 200 is open, which may be advantageous in reducing the weight of the battery pack. For example, when the cell cover 200 is made of a material such as steel, if the lower end portion of the cell cover 200 is formed in an open shape, the weight of the cell cover 200 may be reduced by as much as the lower plate. Moreover, as shown in FIG. 1, the battery pack 10 may include many cell covers 200, and if all the cell covers 200 do not have a lower plate and are formed in an open shape, the weight of the battery pack 10 may be significantly reduced.

In addition, according to one aspect of the present disclosure, the configuration of a long cell having a long length in a specific direction may be prepared more easily.

For example, in the case of a conventional prismatic cell, when the length in a specific direction is formed to be long, the process of inserting the electrode assembly into a prismatic case may not be easy. In particular, there may be a problem such as damage to the electrode assembly during the insertion process of the electrode assembly. However, according to an embodiment of the present disclosure, unidirectional lengthening of the pouch-type battery cell 100 and the cell cover 200 may be easily implemented during the steps of molding the pouch exterior material, manufacturing the electrode assembly, or manufacturing the cell cover 200. And, the process of inserting the long cell manufactured to be lengthened in one direction in this way through an open side (e.g., bottom) of the cell cover 200 may be easily performed. Therefore, according to this aspect of the present disclosure, even when manufacturing the battery pack 10 using long cells, it is possible to secure excellent assemblability, processability, productivity, and the like.

As shown in FIG. 2, each pouch-type battery cell 100 may have a receiving portion indicated by 'R' and edge portions indicated by 'E1' to 'E4'. Here, the receiving portion R may be a portion that accommodates an electrode assembly in which a positive electrode plate and a negative electrode plate are stacked on each other with a separator interposed therebetween. In addition, an electrolyte may be accommodated in this receiving portion R. And, the edge portions E1 to E4 may be disposed in a form surrounding the receiving portion R.

In particular, the edge portions may be sealing portions where the pouch exterior material, which is the case of the pouch-type battery cell, is sealed. For example, in the embodiment of FIG. 2, there are four edge portions, which can be said to be located at the upper edge, lower edge, front edge, and rear edge, respectively, based on the receiving portion R. In this case, all four edge portions E1 to E4 may be sealing portions. Alternatively, some of the four edge portions E1 to E4 may be configured in a folded form that is not a sealing portion. For example, in the embodiment of FIG. 2, the upper edge portion E1, the front edge portion E3, and the rear edge portion E4 are all sealing portions, but the lower edge portion E2 may be a folded portion of the pouch exterior material. For example, the upper edge portion E1 may be a so-called double side folding (DSF) portion that is folded twice as a sealing portion of the pouch-type battery cell 100, and the lower edge portion E2 may be an unsealed portion of the pouch-type battery cell 100.

Hear, a battery cell in which all four edge portions E1 to E4 are sealed may be referred to as a four-sided sealing cell, and a battery cell in which three edge portions E1, E3, E4 are sealed may be referred to as a three-sided sealing cell. In this configuration, the cell cover 200 may be configured to surround both sides of the receiving portion R and a part of the edge portions E1 to E4 of the pouch-type battery cell 100, which may be a four-sided sealing cell or a three-sided sealing cell. For example, as shown in FIG. 5, when one cell cover 200 is configured to surround one pouch-type battery cell 100, the cell cover 200 may be configured to surround both side surfaces of the receiving portion R (e.g., the left surface and the right surface of the same receiving portion R) of the same pouch-type battery cell 100, and a part of the edge portions of the corresponding battery cell 100 from the outside. In another example, when one cell cover 200 is configured to surround a plurality of pouch-type battery cells 100, for example, a plurality of battery cells disposed in the left-right direction, it may be configured to surround the outer surface of the receiving portion of the outermost battery cell and one side edge portions of the entire battery cell. As a more specific example, one cell cover 200 may be configured to surround two pouch-type battery cells 100 stacked in the left-right direction, as shown in FIGS. 2 to 4. At this time, the cell cover 200 may be configured to surround the left surface of the left battery cell, one side edge portions of two battery cells, and the right surface of the right battery cell.

According to this embodiment, the configuration of supporting and protecting one or more pouch-type battery cells 100 by one cell cover 200 may be easily implemented. In addition, according to the above embodiment, the process of handling one or more pouch-type battery cells 100 through the cell cover 200 may be performed easily and safely. In addition, according to the above embodiment, one cell cover 200 may face the surfaces of the two receiving portions R with respect to the pouch-type battery cell 100 accommodated therein. Therefore, cooling performance between the receiving portion R and the cell cover 200 may be further improved. In particular, in this case, surface cooling is implemented through a wide surface of the receiving portion R, and thus cooling efficiency may be improved.

In particular, the cell cover 200 may be configured to surround an edge portion that is not provided with an electrode lead among several edge portions of the pouch-type battery cell 100 accommodated therein. For example, referring to the embodiment shown in FIG. 2, the pouch-type battery cell 100 may have two electrode leads 110, that is, a positive electrode lead and a negative electrode lead. In this case, the two electrode leads may be located at the front edge portion E3 and the rear edge portion E4, respectively. In this case, the cell cover 200 may be configured to surround one of the two remaining edge portions E1, E2 except for the front edge portion E3 and the rear edge portion E4.

Moreover, the cell cover 200 may be arranged to cover both sides of the receiving portion R and the upper edge portion E1 with respect to one or more pouch-type battery cells 100 accommodated and wrapped therein. For example, referring to what is shown in FIG. 5, the cell cover 200 may be configured to surround all of the left surface and right surface of the receiving portion R, and the upper edge portion E1 with respect to one pouch-type battery cell 100. In another example, when the cell cover 200 is configured to surround two pouch-type battery cells 100 stacked in the left-right direction as shown in FIGS. 2 to 4, the cell cover 200 may be configured to surround the left surface of the receiving portion of the left battery cell, the upper edge portions E1 of the two battery cells, and the right surface of the receiving portion of the right battery cell.

According to this embodiment of the present disclosure, the configuration of supporting and protecting one or more battery cells by one cell cover 200 may be easily implemented. In particular, according to the above embodiment, the lower edge portion E2 may be located adjacent to the open end of the cell cover 200 to face the pack case 300 without being surrounded by the cell cover 200, and may be in direct face-to-face contact with the pack case 300. Therefore, heat from the pouch-type battery cell 100 wrapped by the cell cover 200 may be quickly and smoothly discharged toward the pack case 300 below. Accordingly, the cooling performance of the battery pack 10 may be secured more effectively.

In particular, this configuration may be implemented more effectively when cooling is mainly performed in the lower portion of the pack case 300. For example, in the case of a battery pack mounted on an electric vehicle, cooling may be mainly performed in the lower portion of the pack case 300 as it is mounted on the lower portion of the vehicle body. At this time, as in the above embodiment, when the lower edge portion E2 of each pouch-type battery cell 100 is in face-to-face contact with the pack case 300, heat is quickly transferred from each battery cell 100 to the pack case 300, and thus cooling performance may be further improved.

In the pouch-type battery cell 100, the upper edge portion E1, which is a sealing portion, may be relatively more vulnerable to the discharge of high-temperature gas or flame than the lower edge portion E2, which is an unsealed portion. However, according to the above embodiment, the upper edge portion E1, which is a sealing portion, may be disposed to face the cell cover 200, thereby being more advantageous for directional venting.

The cell cover 200 may be made of various materials to ensure rigidity. In particular, the cell cover 200 may be made of a metal material. In the case of such a metal material, the stacked state of the pouch-type battery cells 100 may be more stably maintained, and the pouch-type battery cells 100 may be more safely protected from external impact. In particular, the cell cover 200 may include a steel material, specifically a SUS material. For example, the cell cover 200 may be entirely made of a SUS material. The cell cover 200 made of SUS may have a thickness of approximately 2 mm.

As such, when the cell cover 200 is made of a steel material, it has excellent mechanical strength or rigidity, and thus may more stably support the stacked state of the pouch-type battery cells 100. In addition, in this case, it is possible to more effectively prevent damage to or breakage of the pouch-type battery cell 100 from external impacts, such as needle bodies. In addition, in this case, handling of the pouch-type battery cell may become easier.

In addition, as in the above embodiment, when the cell cover 200 is made of a steel material, the overall structure may be stably maintained due to its high melting point in the event of occurrence of a flame from the battery cell 100. In particular, since the steel material has a higher melting point than aluminum material, it may not be melted even with flame ejected from the battery cell 100 and its shape may remain stable. Therefore, the effect of preventing or delaying flame propagation between the battery cells 100, venting control effects, and the like may be secured excellently.

Here, the cell cover 200 is a unit cover and may include a first cover 210 and a second cover 220, as shown in FIGS. 2 to 5. In addition, the cell cover 200 may be configured allow venting gas to be discharged into the separation space S between the two unit covers 210, 220. For example, referring to FIGS. 4 and 5, the cell cover 200 may allow venting gas to be discharged as indicated by arrows through the separation space S formed between the two unit covers 210, 220.

While the pouch-type battery cell 100 has the advantage of enabling to implement a secondary battery of the same capacity with a smaller volume and mass on account of its being lightweight, less prone to electrolyte leakage, and flexible in shape, it has a task of ensuring safety due to a risk of explosion in case of overheating, which is one of the important tasks. Overheating of the pouch-type battery cell 100 occurs due to various reasons, one of which may be a case where an overcharge exceeding a limit flows through the pouch-type battery cell 100. When an overcharge is applied, the pouch-type battery cell 100 generates heat by Joule heat, and thus the internal temperature of the battery cell 100 rapidly increases. A rapid rise in temperature may cause a decomposition reaction of the electrolyte to generate gas. This resulting increase in pressure inside the pouch exterior material may cause a swelling phenomenon, a type of bulging phenomenon, which may lead to serious problems such as explosion of the secondary battery. When gas is generated inside the pouch-type battery cell 100 due to exposure to high temperature, external impact, and the like, as well as such overcharge, it is necessary to effectively discharge the gas to ensure the safety of the secondary battery. Discharging gas generated inside the secondary battery to the outside is called venting. The cell cover 200 included in the battery pack 10 according to an embodiment of the present disclosure may be configured to allow venting gas to be discharged into the separation space S between the two unit covers 210, 220, thereby ensuring the safety of the secondary battery.

The first cover 210 may be configured to surround the left surface and one edge of the wrapped pouch-type battery cell 100. And, the second cover 220 may be configured to surround the right surface and the other edge of the wrapped pouch-type battery cell 100. Here, the first cover 210 and the second cover 220 are each configured in an approximate L shape, so that the cell cover 200 according to this embodiment of the present disclosure can be said to be configured in a form where two L-shaped unit covers 210, 220 are coupled to each other.

In particular, the first cover 210 and the second cover 220 may be configured to surround the upper edge of the pouch-type battery cell 100.

Meanwhile, in the embodiments of FIGS. 1 and 2, the upper edges of the first cover 210 and the second cover 220 are shown only in a form being spaced apart from each other, but a support portion that supports the separation space S between two unit covers 210, 220 may be provided in this separation space S. In addition, these two unit covers 210, 220 may be fastened and fixed to each other by various fastening methods such as welding, adhesion, fitting, and hooking.

In addition, the two unit covers 210, 220 may be configured such that one ends thereof are bent toward each other. For example, as shown in FIGS. 2 to 5, the upper end of the first cover 210 may be bent in the right direction, and the upper end of the second cover 220 may be bent in the left direction. Here, the upper end of the first cover 210 and the upper end of the second cover 220 may be laid over in the vertical direction while being at least partially spaced apart.

Each of the two unit covers 210, 220 may be configured in a form of bending one plate. For example, each of the two unit covers 210, 220 may be configured to surround one or more pouch-type battery cells 100 by bending one end of one plate at about 90 degrees.

The cell cover 200 may be configured to surround both sides and an upper edge of at least some of the pouch-type battery cells 100. For example, the cell cover 200 composed of two unit covers 210, 220 can be said to include two side covers surrounding both left and right sides and an upper cover portion surrounding the upper edge of the pouch-type battery cell 100 accommodated therein, as shown in FIGS. 2 to 5. At this time, the upper cover portion can be said to be at least partially double-formed. In this case, the cross-sectional configuration of the cell cover 200, as viewed from the front side, can be said to be roughly similar to an 'n' shape. Therefore, in this case, the cell cover 200 may also be referred to as 'n-fin'. In addition, the respective cross-sectional configuration of the first cover 210 and the second cover 220, as viewed from the front side, can be said to be roughly similar to an 'L' shape. Therefore, in this case, the first cover 210 and the second cover 220 may also be referred to as 'L-fin'. And, the cell cover 200 can be said to be an n-fin formed of two L-fins.

More specifically, the first cover 210 includes a first upper cover portion 212 configured to surround the top of the upper edge portion E1 of the pouch-type battery cell 100, and a first side cover portion 214 extending downward from one end of the first upper cover portion 212 and surrounding the outside of one side receiving portion of the wrapped pouch-type battery cell 100. The second cover 220 includes a second upper cover portion 222 configured to surround the top of the upper edge portion E1 of the pouch-type battery cell 100, and a second side cover portion 224 extending downward from one end of the second upper cover portion 222 and surrounding the outside of the other side receiving portion of the wrapped pouch-type battery cell 100. The first upper cover portion 212 and the second upper cover portion 222 are spaced apart from each other in the vertical direction. In this embodiment, the second upper cover portion 222 is spaced apart toward the upper edge portion E1 of the pouch-type battery cell 100 from the first upper cover portion 212.

Here, the first upper cover portion 212 and the second upper cover portion 222 may be configured to surround the top of the upper edge portion E1 of the pouch-type battery cell 100 accommodated therein. In particular, the portion located between the two side cover portions 214, 224 in the cell cover 200 and the side of the pouch-type battery cell 100 facing the portion may be spaced apart from each other by a predetermined distance. And, this separation space S may be configured in an empty form. According to this embodiment of the present disclosure, a path through which venting gas or the like moves may be provided due to the empty space formed between the side portion (edge portion) of the pouch-type battery cell 100 and the cell cover 200. For example, when venting gas is generated in the battery cell 100 accommodated inside the cell cover 200 due to thermal runaway or the like, the generated venting gas may move in the front-rear direction (X-axis direction) through the empty space between the upper edge portion E1 adjacent to the first upper cover portion 212, the first upper cover portion 212, and the first side cover portion 214. Accordingly, even if a configuration for discharging venting gas to the outside of the cell cover 200, such as a through hole or incision to be described later, is located in any part of the cell cover 200 or other components, the venting gas may move smoothly and quickly to the part where the corresponding venting configuration is located. Therefore, the internal pressure of the cell cover 200 may be prevented from increasing, and efficient venting control, such as guiding the discharge direction of the venting gas, may be possible.

Meanwhile, the first upper cover portion 212 may also be configured to be in contact with the upper edge portion E1 of the pouch-type battery cell 100.

In addition, the first upper cover portion 212 may be configured in a planar shape. In this case, the first upper cover portion 212 has a cross-section formed in a straight shape in the horizontal direction, so that the upper edge portion E1 of the pouch-type battery cell 100 may be wrapped in a straight shape from the outside.

The first side cover portion 214 may be configured to extend downward from one end of the first upper cover portion 212. For example, the first side cover portion 214 may be configured to extend long in a downward direction (-Z-axis direction in the drawing) from the left end of the first upper cover portion 212. Moreover, the first side cover portion 214 may be formed in a planar shape. In this case, the first side cover portion 214 may be configured in a bent form from the first upper cover portion 212.

And, the first side cover portion 214 may be configured to surround the outside of one side receiving portion of the pouch-type battery cell 100 accommodated therein. For example, when one pouch-type battery cell 100 is accommodated in the cell cover 200, the first side cover portion 214 may be configured to surround the left surface of the receiving portion of the accommodated pouch-type battery cell 100 at the left side. Here, the first side cover portion 214 may be in direct contact with the outer surface of the receiving portion.

The second side cover portion 224 may be positioned to be spaced apart from the first side cover portion 214 in the horizontal direction. And, the second side cover portion 224 may be configured to extend downward from one end of the second upper cover portion 222. For example, the second side cover portion 224 may be configured to extend long in a downward direction from the right end of the second upper cover portion 222. Moreover, the second side cover portion 224 may also be configured in a planar shape like the first side cover portion 214. In this case, it can be said that the second side cover portion 224 and the first side cover portion 214 are disposed parallel to each other while being spaced apart in the horizontal direction. And, the second side cover portion 224 may be configured in a bent form from the second upper cover portion 222.

The first side cover portion 214 and the first upper cover portion 212 may be formed of one plate. The second side cover portion 224 and the second upper cover portion 222 may also be formed of one plate. In this case, it can be said that several components of each of the two unit covers 210, 220 are integrally manufactured. Here, each component may be distinguished by a bent portion. In particular, one bent portion may be formed in one plate. And, based on this one bent portion, the first side cover portion 214 and the first upper cover portion 212 may be distinguished, and the second side cover portion 224 and the second upper cover portion 222 may be distinguished. In this way, the configuration of forming a bent portion in one plate to form the cell cover 200 may be implemented in various ways, such as pressing or roll forming.

According to this embodiment of the present disclosure, manufacturing of the cell cover 200 may be more simplified. Therefore, the manufacturing cost or time of the battery pack may be reduced. In addition, according to this embodiment, the mechanical strength and rigidity of the cell cover 200 may be secured at a higher level. In addition, in this case, heat conduction performance through the cell cover 200 is further enhanced, which may further improve cooling performance.

In addition, the second side cover portion 224 may be configured to surround the outside of the other side receiving portion of the pouch-type battery cell 100 accommodated therein. For example, when one pouch-type battery cell 100 is accommodated in the cell cover 200, the second side cover portion 224 may be configured to surround the right surface of the receiving portion of the accommodated pouch-type battery cell 100 at the right side. Here, the second side cover portion 224 may be in direct contact with the outer surface of the receiving portion.

In the above embodiment, the internal space may be limited by the first and second upper cover portions 212, 222 and the first and second side cover portions 214, 224. And, the cell cover 200 may accommodate one or more pouch-type battery cells 100 in this limited internal space.

The two unit covers 210, 220 may be configured such that the bent ends thereof are at least partially spaced apart from each other to allow venting gas to be discharged. For example, referring to the embodiment of FIGS. 4 and 5, the upper bent portions of the two unit covers 210, 220 may be spaced apart from each other in the vertical direction to form a separation space S. And, venting gas may be discharged through this separation space S.

The second side cover portion 224 may have a longer length in the vertical direction compared to the first side cover portion 214. In FIG. 4, the length of the first side cover portion 214 is indicated by L1 and the length of the second side cover portion 224 is indicated by L2. In this case, it may be L2 > L1.

The lower ends C1 of the first side cover portion 214 and the second side cover portion 224 may contact the bottom surface of the pack case 300. If the heights of the lower ends C1 of the first side cover portion 214 and the second side cover portion 224 are the same, a separation configuration between the first upper cover portion 212 connected to the first side cover portion 214 and the second upper cover portion 222 connected to the second side cover portion 224 may be achieved just by making the length L2 of the second side cover portion 224 longer than the length L1 of the first side cover portion 214.

Venting gas may move through the gap between the first upper cover portion 212 and the second side cover portion 224 to a venting channel defined as the separation space S between the first upper cover portion 212 and the second upper cover portion 222, and may be discharged through the gap between the second upper cover portion 222 and the first side cover portion 214. That is, it is equivalent to forming an n-fin with two L-fins, and forming a venting channel in the upper gap between the L-fins. Venting gas may be discharged through this venting channel.

According to this embodiment of the present disclosure, it is possible to induce the discharge direction of flames or the like to the separation space S between the two unit covers 210, 220. For example, according to the above embodiment, flames or the like may be discharged from the upper end of the cell cover 200 in the Y-axis direction. Directional venting in the desired direction (Y-axis direction) may be made by effectively preventing discharged gas or flame from heading toward the upper side (Z-axis direction).

If the gas generated inside the secondary battery is discharged in various directions instead of one direction, the venting gas may not be easily discharged to the outside, and the time for discharging the venting gas is prolonged, which may significantly reduce the safety of the secondary battery. According to the present disclosure, the venting gas may be discharged in one direction through two unit covers 210, 220. According to the above embodiment, when high-temperature gas or flame is discharged from the pouch-type battery cell 100 in a situation such as thermal runaway, the discharged gas or flame may not be heading toward the upper side. In particular, when a passenger is located on the upper side of the battery pack 10, such as in an electric vehicle, it is possible to suppress or delay gas or flame from heading toward the passenger according to the above embodiment.

In this way, according to the present disclosure, flame or gas may be guided and discharged in a preset direction. In this case, even if thermal runaway occurs in any one battery cell 100, the flame or gas generated in the battery cell 100 may be discharged only in the preset direction through the cell cover 200. If the preset direction is not toward other cell covers 200, flame or gas may not be propagated to other battery cells 100 disposed adjacent to the battery cell 100 in which thermal runaway occurs. That is, even if thermal runaway occurs in any one battery cell 100, the effect of the thermal runaway on the other battery cells 100 may be minimized.

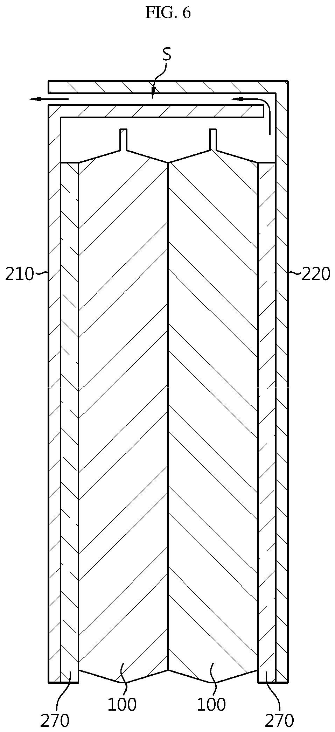

The first side cover portion 214 and the pouch-type battery cell 100 may be bonded, and the second side cover portion 224 and the pouch-type battery cell 100 may be bonded. While the bonding between the first side cover portion 214 and the pouch-type battery cell 100 and between the second side cover portion 224 and the pouch-type battery cell 100 may be direct, it is preferable that indirect bonding is performed in a state of further including an insulating member 270 as what is shown in FIG. 6.

FIG. 6 is a cross-sectional view schematically showing the coupling configuration of a pouch-type battery cell and a cell cover accommodated inside a battery pack according to still another embodiment of the present disclosure.

Referring to FIG. 6, the cell cover 200 may further include an insulating member 270. The insulating member 270 may be made of an electrically insulating material and may be provided on the inner surface of the cell cover 200 in which the pouch-type battery cell 100 is accommodated. In particular, the insulating member 270 may have an adhesive layer on at least one side to be adhered to the inner surface of the cell cover 200. In addition, the insulating member 270 has adhesive layers on both sides, so that it may be adhered not only to the inner surface of the cell cover 200 but also to the pouch-type battery cell 100. In addition, the insulating member 270 may be made of a material having heat resistance. For example, the insulating member 270 may be configured in the form of a heat-resistant tape in which an adhesive is applied to the surface of a ceramic sheet having heat resistance. The insulating member 270 may also be a film made of polyimide (PI). The thickness of the insulating member 270 may be approximately 0.5 mm. In addition, the insulating member 270 may also be located on the inner surface and the outer surface of the cell cover 200, that is, on both sides.

Meanwhile, in the battery pack according to the present disclosure, a thermal interface material (TIM) may be interposed to increase heat transfer performance between different components. For example, TIM may be filled between the battery cell 100 and the cell cover 200, between the cell cover 200 and the pack case 300, and/or between the battery cell 100 and the pack case 300. In this case, the cooling performance of the battery pack may be further improved. The TIM is intended to reduce contact thermal resistance between members. In the battery pack where cooling is important, it is necessary to improve the thermal performance of the entire system by using a material capable of minimizing contact thermal resistance as described above. The TIM may be diverse, such as a thermally conductive grease, a thermal sheet, a thermal pad, a thermally conductive adhesive, and a phase change material (PCM). For a specific example, the TIM may be any one of a thermally conductive silicone-based bond, a thermally conductive silicone pad, and a thermally conductive acrylic bond. Heat-dissipating silicone-based adhesives and heat-dissipating acrylic adhesives are commercially available in one or two liquid types and may be applied between different components by means of coating or injection. The heat-dissipating silicone pad includes a base film such as double-sided tape and release paper on the top and bottom of it, which may be applied between different components by an adhesive method after removing the release paper. Since heat-dissipating silicone-based adhesives, heat-dissipating silicone pads, and heat-dissipating acrylic adhesives have higher thermal conductivity compared to general adhesives, the amount and speed of heat transfer between different components may be further increased. Therefore, according to this embodiment of the present disclosure, the heat dissipation performance of the pouch-type battery cell 100 may be further enhanced, so that the cooling performance of the battery pack 10 may be further improved.

Referring to FIG. 1 again, a cell unit including the pouch-type battery cell 100 and the cell cover 200 may be accommodated inside the pack case 300 in a form where a plurality thereof are stacked. One unit in which a plurality of cell units are stacked will be referred to herein as a cell unit block. For example, a plurality of cell units may be disposed to be stacked side by side in the horizontal direction in the internal space of the lower case 320, as shown in FIG. 1. At this time, the plurality of cell units may be stacked so that each surface of the cell cover 200 faces each other. In particular, each cell cover 200 may be disposed to be stacked in the left-right direction in a form where the first side cover portion 214 and the second side cover portion 224 face each other. In addition, each cell unit may also be stacked in the front-rear direction. In this case, a plurality of cell units may be stacked in a form where the electrode leads 110 protruding in the front-rear direction from each cell unit face each other. According to the above embodiment of the present disclosure, space efficiency may be further improved by eliminating a module case or the like of the battery module.

In addition, in arranging a plurality of pouch-type battery cells 100 as in the illustrated example, when a plurality of cell unit blocks are arranged in rows and columns in such a way that one cell unit block disposed in the left-right direction is also stacked in the form of two cell unit blocks provided in the front-rear direction, the venting gas emission direction by one cell unit block and the venting gas emission direction by another cell unit block may be different. For example, the venting gas emission direction by one cell unit block may be configured to be directed toward the pack case 300 without heading toward other cell unit blocks. In the illustrated example, the venting gas emission direction of the left front end and left rear end cell unit blocks CUB 1, CUB2 is in the +Y-axis direction as shown in FIGS. 1 and 3. The arrangement configuration as in FIGS. 1 and 3 may be reversed so that the venting gas emission direction of the right front end and right rear end cell unit blocks CUB3, CUB4 is in the -Y-axis direction.

According to the present disclosure, it is possible to effectively respond to the thermal event in the event of a thermal runaway in a specific battery cell. In particular, in the case of the present disclosure, it is possible to block or appropriately control the accumulation or discharge of heat corresponding to the ignition source among the three elements (fuel, oxygen, and ignition source) that generate flame. Moreover, in the case of the present disclosure, in order to block heat accumulation and prevent flame emission, emission control of venting gas and directional venting through the cell cover 200 may be implemented. In addition, according to one aspect of the present disclosure, internal short circuit or structural collapse may be prevented even when a thermal event occurs.

In addition, the battery pack according to the present disclosure may further include a control module 400 accommodated in the internal space of the pack case 300. This control module 400 may include a BMS. The control module 400 is mounted in the internal space of the pack case 300 and may be configured to generally control the charge/discharge operation and data transmission/reception operation of the pouch-type battery cell 100. The control module 400 may be provided in a pack unit rather than a module unit. More specifically, the control module 400 may be provided to control the charge/discharge state, power state, and performance state of the pouch-type battery cell 100 through pack voltage and pack current. The control module 400 estimates the state of the battery cell 100 in the battery pack 10 and manages the battery pack 10 using the estimated state information. For example, state information of the battery pack 10, such as state of charge (SOC), state of health (SOH), maximum input/output power allowance, and output voltage of the battery pack 10, is estimated and managed. And, using this state information, the charging or discharging of the battery pack 10 may be controlled, and furthermore, the replacement time of the battery pack 10 may also be estimated.

As shown in FIG. 1, the battery pack 10 according to the present disclosure may further include a battery disconnect unit. The battery disconnect unit (BDU) 500 may be configured to control the electrical connection of battery cells to manage the power capacity and function of the battery pack 10. To this end, the battery disconnect unit 500 may include a power relay, a current sensor, a fuse, and the like. The battery disconnect unit 500 is also provided in a pack unit rather than a module unit, and various disconnect units known at the time of filing the present disclosure may be employed.

In addition, the battery pack 10 according to the present disclosure may further include various components of battery packs known at the time of filing the present disclosure. For example, the battery pack 10 according to an embodiment of the present disclosure may further include a manual service disconnector (MSD) that allows an operator to shut off the power by manually disconnecting the service plug. In addition, it may also further include flexible busbars or cables for interconnecting a plurality of cell unit blocks.

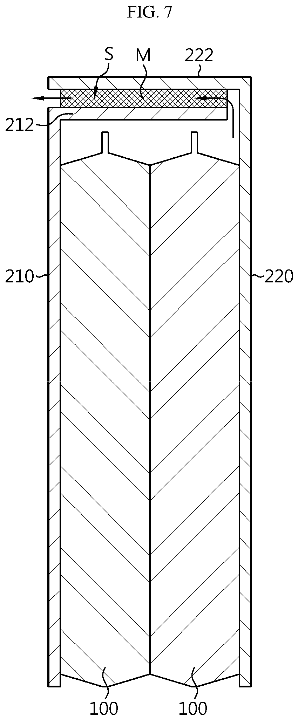

FIG. 7 is a view schematically showing a partial cross-sectional configuration of a battery pack according to still another embodiment of the present disclosure.

The cell cover 200 may have a mesh structure M in the separation space S between the two unit covers 210, 220. For example, referring to the embodiment of FIG. 7, a mesh structure as indicated by M may be located in the separation space S between the first upper cover portion 212 of the first cover 210 and the second upper cover portion 222 of the second cover 220. And, when the venting gas is discharged to the outside through the separation space S between the first upper cover portion 212 of the first cover 210 and the second upper cover portion 222 of the second cover 220, the cell cover 200 may be formed to pass through this mesh structure M. In this case, the mesh structure M may be composed of a structure in which sparks or active material particles included in the venting gas may be captured, such as a hole size enabling such capture, and a material capable of withstanding temperatures above a certain level.

In the event of a fire or explosion in a part of the pouch-type battery cell 100, it is preferable to include this mesh structure M so that there may be no risk in which fragments of the high-temperature electrode assembly, flames, and high-temperature gas are discharged to affect other adjacent pouch-type battery cells 100. The mesh structure M may maintain the ejection function of gas and flame generated in the event of ignition of the battery cell 100, but may suppress movement of the high-temperature active material to the adjacent battery cell 100 even if it is ejected from the exploded battery cell 100. Accordingly, venting gas is discharged, but emission of ignition sources such as sparks is suppressed. Therefore, the present disclosure may prevent a chain ignition such as a thermal runaway, fire, or explosion propagating to other battery cells 100, thereby greatly improving safety.

The mesh structure M may be one in which a number of holes are installed on a metal mesh or metal plate. The holes may be formed by removing a part of the metal plate by punching or etching. The metal mesh is formed by interweaving multiple metal wires into a so-called wire mesh. In a preferred example, the mesh structure M is composed of one or more layers, preferably several layers, of a metal mesh of 2 mesh or more. Mesh is a method of grading based on the size of the mesh and is represented by the number of meshes per inch of length. That is, mesh refers to a unit representing the size of the holes or particles of a sieve, and can be said to be the number of mesh eyes in a one-inch square. For example, 200 mesh means that wires with a diameter of 2/1000 inches are spaced 3/1000 inches apart, indicating there are 200 meshes in a length of one inch. Therefore, N mesh is N/25.4 mm, and for example, if a metal mesh of 2 mesh or more is used, the size of one hole is 12.7x12.7 mm² or less. Considering only anti-flammability, the smaller the mesh spacing, the better. However, if the spacing is too narrow, it is often blocked by foreign substances such as dust, and thus, be sure to use it appropriately.

The mesh structure M may be non-combustible. Any of these materials may be used as long as they are difficult to burn. Specifically, any one of copper, aluminum, cast iron, Monel (Ni + Cu), SUS, and steel may be used, but is not limited thereto. In addition, it is preferable that the mesh structure M is selected as a material that not only has anti-flammability ability to suppress flames, but also has mechanical properties capable of withstanding explosion pressure.

The mesh structure M may be used purely by itself or laminated with a polymer resin layer, but is not limited thereto. The polymer resin layer may use any one selected from: polyvinylidene fluoride-hexafluoropropylene, polyvinylidene fluoride-trichloroethylene, polymethyl methacrylate, polyacrylonitrile, polyvinylpyrrolidone, polyvinylacetate, polyethylene-vinyl acetate copolymer, polyethylene oxide, cellulose acetate, cellulose acetate butylate, cellulose acetate propionate, cyanoethyl pullulan, cyanoethyl polyvinyl alcohol, cyanoethyl cellulose, cyanoethyl sucrose, pullulan, carboxyl methyl cellulose, acrylonitrile-styrene-butadiene copolymer, polyimide, and mixtures thereof, but is not limited thereto.

This mesh structure M not only splits the flame into small pieces while it passes through, but also causes an endothermic reaction absorbing the energy of the flame, resulting in a temperature drop and an anti-flammability effect. More specifically, since the mesh structure M has a small hole, gases such as gas or steam may pass through, but flames are difficult to pass through. In addition, when ignited by a mixture of combustible gas and air inside the secondary battery, the mesh structure M absorbs and dissipates heat generated from the combustible gas mixture, thereby lowering the combustion temperature so that the gas on the other side does not reach its spontaneous ignition temperature. This is because the heated gas with high heat loses heat to the material that makes up the mesh structure M while passing through the mesh structure M. The mesh structure M is made of a metal material including numerous holes, thereby making it a heat absorbing plate with a very wide cross-sectional area.

Therefore, as the flame passes through the mesh structure M, it may lose enough heat that the flame can no longer maintain, and the explosion may subside.

Since the mesh structure M may be provided as a thin small plate, it may be appropriately placed in the separation space S within the cell cover 200 and may suppress an increase in size of the cell unit. In addition, since the mesh structure M has multiple holes, an increase in weight may also be suppressed. Thus, according to the present disclosure, an increase in size and weight of the battery pack 10 is suppressed, and safety is improved by preventing flames being ejected to the outside even in the event of flames erupting from the secondary battery. According to this embodiment of the present disclosure, external discharge of sparks, flames, high-temperature active material particles, and the like included in the venting gas may be suppressed. Therefore, fire suppression performance may be further improved. As such, according to the present disclosure, spark blocking and the like may be implemented. When the pack case 300 is made of aluminum for light weight, if sparks fly directly into the pack case 300, they may melt the pack case 300 and cause structural collapse. According to an embodiment of the present disclosure, sparks may be prevented from flying directly toward the pack case 300, so that such structural collapse may be prevented.

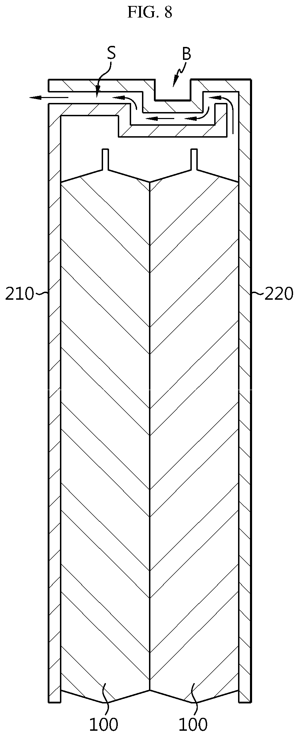

FIG. 8 is a view schematically showing a partial cross-sectional configuration of a battery pack according to still another embodiment of the present disclosure.

Referring to FIG. 8, the cell cover 200 may be configured such that the gas discharged into the separation space S between the two unit covers 210, 220 is bent. For example, as shown in FIG. 8, the cell cover 200 may have a bending portion B formed in the two unit covers 210, 220 so that the movement path of the gas discharged into the separation space S between the two unit covers 210, 220 is increased. The bending portion B is formed on the first upper cover portion 212 and the second upper cover portion 222, so that the aforementioned venting channel may be formed to be curved. In addition, the bending portion B may be configured such that unevenness, wave patterns, or curved portions are formed. And, by such a configuration, the venting gas discharged into the separation space S between each unit cover 210, 220 may have a shape that is bent two or more times during the discharge process.

In addition, in the case of FIG. 8, the unevenness or the like formed on the two unit covers 210, 220 is configured such that the venting gas moves in a bending manner in the vertical direction to increase the gas path in the vertical direction, but the unevenness or the like may also be configured such that the venting gas moves in a bending manner in the horizontal direction.

In addition, in the case of FIG. 8, the unevenness or the like formed on the two unit covers 210, 220 is shaped to be conformal to each other, and the unevenness may also be formed on only one of the two unit covers 210, 220.

According to this embodiment, it is possible to suppress or delay the discharge of flames or sparks with strong straightness and contribute to lowering the temperature of the venting gas while the venting gas is discharged along a longer movement path.

Meanwhile, one or more battery modules may be accommodated in the battery pack. In this case, the configurations described in the various embodiments described above, particularly the contents of the battery cell and the cell cover, may also be applied to the battery module.

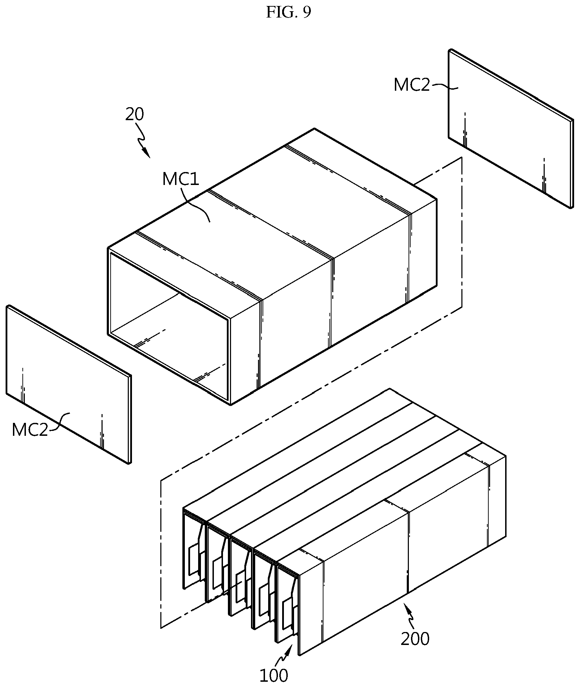

FIG. 9 is a view schematically showing the configuration of a battery module according to an embodiment of the present disclosure.

Referring to FIG. 9, the battery module 20 may be a battery module where one or more thereof are accommodated in the internal space of the pack case 300 as shown in FIG. 1. The battery module 20 may include a plurality of pouch-type battery cells 100 as described above.

The battery module 20 may include a module case that accommodates the pouch-type battery cells 100 in the internal space. The module case may include a main body frame MC1 and an end plate MC2. The main body frame MC1 may be configured such that the upper, lower, left, and right sides are closed, and the front and rear sides are open. At this time, the upper, lower, left, and right sides may each be configured in the form of a plate, and these four plates may be manufactured in the form of a tube integrated with each other. And, this type of main body frame MC1 may be referred to as a mono frame. The end plate MC2 may be configured to be coupled to the opening of the main body frame MC1.

In another example, the module case may also include a U-frame, a top plate, and an end plate. The left plate and right plate may be configured to be integral with the base plate to form the U-frame. The top plate may be coupled to the upper part of the U-frame, and the end plate may be coupled to openings at the front and rear ends of the U-frame, respectively.

The battery module 20 may include two unit covers 210, 220 that are at least partially spaced apart, as described above, to be provided to at least partially surround at least some of the pouch-type battery cells 100 among the plurality of pouch-type battery cells 100 in the internal space of the module case, and may include a cell cover 200 configured to allow venting gas to be discharged into the separation space S between the two unit covers 210, 220. Here, in the case of the plurality of pouch-type battery cells 100 and the cell cover 200, the previous description of the battery pack may be applied in the same or similar manner. In addition, the battery module 20 may be configured to include busbars for electrically connecting the plurality of pouch-type battery cells 100, a sensing wire for sensing voltage and temperature of the plurality of pouch-type battery cells 100, and the like.

The battery pack 10 or the battery module 20 according to an embodiment of the present disclosure may be applied to various devices. These devices represent transportation means such as electric bicycles, electric vehicles, hybrid vehicles, and the like, but the present disclosure is not limited thereto. The battery pack 10 is suitable for use as a battery pack for electric vehicles. In addition, it can be also used as an energy source for an ESS.

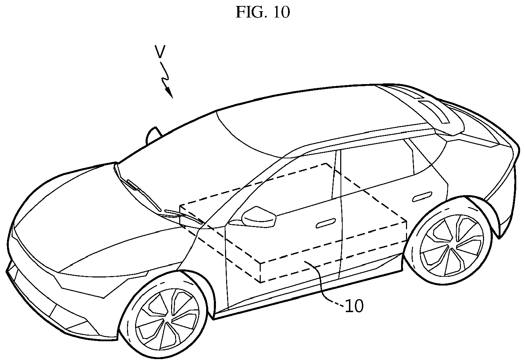

FIG. 10 is a view schematically showing the configuration of a vehicle according to an embodiment of the present disclosure.

Referring to FIG. 10, a vehicle V according to an embodiment of the present disclosure may include the battery pack 10 according to an embodiment of the present disclosure described above. Here, the vehicle V may include, for example, a predetermined vehicle that uses electricity as a driving source, such as an electric vehicle or a hybrid vehicle. Also, in addition to the battery pack 10 according to the present disclosure, the vehicle V may further include various other components included in the vehicle, such as a vehicle body, a motor, or the like.

The battery pack 10 may be disposed at a predetermined location within the vehicle V. The battery pack 10 may be used as an electrical energy source to drive the vehicle V by providing driving force to the motor of the electric vehicle. In this case, the battery pack 10 has a high nominal voltage of 100 V or more.

The battery pack 10 may be charged or discharged by an inverter depending on the driving of the motor and/or internal combustion engine. The battery pack 10 may be charged by a regenerative charging device coupled to a brake. The battery pack 10 may be electrically connected to the motor of the vehicle V through an inverter.

Meanwhile, the terms indicating directions as used herein such as upper, lower, left, right, front, and rear are used for convenience of description only, and it is obvious to those skilled in the art that the term may change depending on the position of the stated element or an observer.

The present disclosure has been hereinabove described with regard to a limited number of embodiments and drawings, but the present disclosure is not limited thereto and it is obvious to those skilled in the art that a variety of modifications and changes may be made thereto within the technical aspects of the present disclosure and the equivalent scope of the appended claims.

### [Explanation of reference signs]

| | | | |
|---|---|---|---|
| 10: | battery pack | 20: | battery module |
| 100: | pouch-type battery cell | 200: | cell cover |
| 210: | first cover | 212: | first upper cover portion |
| 214: | first side cover portion | 220: | second cover |
| 222: | second upper cover portion | 224: | second side cover portion |
| 270: | insulating member | 300: | pack case |
| M: | mesh structure | B: | bending portion |
| V: | vehicle | | |

## Claims

1. A battery pack comprising:
a plurality of pouch-type battery cells;
a pack case accommodating the pouch-type battery cells in the internal space; and
a cell cover comprising two unit covers at least partially spaced apart, provided to at least partially surround at least some of the pouch-type battery cells among the plurality of pouch-type battery cells in the internal space of the pack case, and configured to allow venting gas to be discharged into the separation space between the two unit covers.

2. The battery pack according to claim 1,
wherein the cell cover is configured to support the plurality of pouch-type battery cells in an upright state.

3. The battery pack according to claim 1,
wherein the cell cover partially surrounds the pouch-type battery cell so that at least one side of the wrapped pouch-type battery cell is exposed toward the pack case.

4. The battery pack according to claim 1,
wherein the pouch-type battery cell has a receiving portion in which an electrode assembly is accommodated and edge portions around the receiving portion,
wherein the cell cover is configured to surround both sides of the receiving portion and a part of the edge portions of the wrapped pouch-type battery cell.

5. The battery pack according to claim 4,
wherein the cell cover is provided to cover both side surfaces of the receiving portion and an upper edge portion of the wrapped pouch-type battery cell.

6. The battery pack according to claim 1,
wherein the two unit covers comprise a first cover configured to surround the left surface and one edge of the wrapped pouch-type battery cell, and a second cover configured to surround the right surface and the other edge of the wrapped pouch-type battery cell.

7. The battery pack according to claim 6,
wherein the first cover comprises a first upper cover portion configured to surround the top of an upper edge portion of the pouch-type battery cell, and a first side cover portion extending downward from one end of the first upper cover portion and surrounding the outside of one side receiving portion of the wrapped pouch-type battery cell, and
the second cover comprises a second upper cover portion configured to surround the top of an upper edge portion of the pouch-type battery cell, and a second side cover portion extending downward from one end of the second upper cover portion and surrounding the outside of the other side receiving portion of the wrapped pouch-type battery cell,
wherein the second upper cover portion is spaced apart from the first upper cover portion in the direction of the upper edge portion of the pouch-type battery cell.

8. The battery pack according to claim 7,
wherein the first side cover portion and the pouch-type battery cell are bonded, and the second side cover portion and the pouch-type battery cell are bonded.

9. The battery pack according to claim 7,
wherein the second side cover portion has a longer length in the vertical direction compared to the first side cover portion.

10. The battery pack according to claim 7,
wherein venting gas moves through the gap between the first upper cover portion and the second side cover portion to a venting channel defined as a separation space between the first upper cover portion and the second upper cover portion, and is discharged through the gap between the second upper cover portion and the first side cover portion.

11. The battery pack according to claim 10,
wherein the venting channel is formed to be curved by including a bending portion in the first upper cover portion and the second upper cover portion.

12. The battery pack according to claim 1,
wherein the two unit covers are configured such that one ends thereof are bent toward each other.

13. The battery pack according to claim 12,
wherein the two unit covers are configured to be laid over in the vertical direction with their bent ends at least partially spaced apart so that the venting gas may be discharged.

14. The battery pack according to claim 12,
wherein each of the two unit covers is configured in a form of bending one plate.

15. The battery pack according to claim 1,
wherein the cell cover has a mesh structure in the separation space between the two unit covers.

16. The battery pack according to claim 1,
wherein the cell cover forms a bending portion on the two unit covers so that the movement path of gas discharged into the separation space between the two unit covers is increased.

17. The battery pack according to claim 1,
which further comprises a control module accommodated in the internal space of the pack case and configured to control charge/discharge of the pouch-type battery cells.

18. A vehicle comprising a battery pack according to any one of claims 1 to 17.

19. A battery module, one or more of which are accommodated in the internal space of the pack case, comprising:
a plurality of pouch-type battery cells;
a module case accommodating the pouch-type battery cells in the internal space; and
a cell cover comprising two unit covers at least partially spaced apart, provided to at least partially surround at least some of the pouch-type battery cells among the plurality of pouch-type battery cells in the internal space of the module case, and configured to allow venting gas to be discharged into the separation space between the two unit covers.

20. A vehicle comprising a battery module according to claim 19.
